(19)

Europäisches Patentamt
European Patent Office
Office européen des brevets

(11) **EP 1 962 161 A1**

(12) **EUROPEAN PATENT APPLICATION**

(43) Date of publication:
**27.08.2008 Bulletin 2008/35**

(51) Int Cl.:
**G05B 19/418** (2006.01)

(21) Application number: **07102731.2**

(22) Date of filing: **20.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **ABB RESEARCH LTD.**
**8050 Zürich (CH)**

(72) Inventors:
• **Gullstrand, Bengt**
  **Karlstad (SE)**
• **Ledung, Lars**
  **72246 Västerås (SE)**
• **Sahlin, Per-Olof**
  **Västerås (SE)**

(74) Representative: **Valea AB**
  **Lindholmspiren 5**
  **417 56 Göteborg (SE)**

(54) **Integration of production environments**

(57)    A system of production environments comprises a first production environment (PL1) and a second production environment (PL2). The first environment (PL1) includes a production planner (10) receiving a request for a first delivery rate of a material, determining if it can be provided, generating, if it cannot, an indication of the capacity, sending the indication and receiving a request for a second delivery rate lying within the capacity. It also includes a production controller (12) controlling the first process to produce the material at a production rate enabling material supply at the second rate to second environment (PL2). The second environment (PL2) includes a production planner (20) determining the first rate, sending the request for the first rate, receiving the indication and determining the second rate. It also includes a production controller (22) adding the material according to the second rate in the second process for producing an output product.

FIG. 2

**Description**

TECHNICAL FIELD OF THE INVENTION

The present invention relates to material production processes. The invention more particularly relates to a method, device and computer program product for controlling a first production process in a first production environment, which produces material for use in a second production process in a second production environment, a method, device and computer program product for controlling a second production process in a second production environment based on material produced by a first production process in a first production environment as well as to a system of production environments.

DESCRIPTION OF RELATED ART

In industrial production processes two or more process may be linked to each other in that a first process produces material that is used in the production of products in a second process. One example of such closely related processes is the paper production process that produces paper out of pulp that is produced in a pulp producing process.

Traditionally such processes have been controlled separately, which may lead to sub-optimisations when the two processes are considered as a whole. It is for instance possible that more pulp than necessary is produced and that thus pulp is stored while waiting to be used. This leads to higher storing costs. It is also possible that the paper process demands more pulp than what can be delivered, which may lead to a lower production capacity of paper and thus the paper production costs will be higher. Such situations can furthermore lead to costly and complicated changes of production plans.

In the field of pulp production there has recently been provided an interesting control method. This method, which is a real time optimization control method, is described in WO 03/107103, where a dynamic model of the production process is provided.

It would therefore be of interest to combine the control of two such interrelated processes.

Simo Säynevirta and Mika Luotojärvi describe in "Integrated Paper Production and Energy Planning, Pulpaper 2004 Conference, Helsinki, Finland, 1 - 3 June 2004 that pulp production planning and paper and board planning can be integrated in real- time.

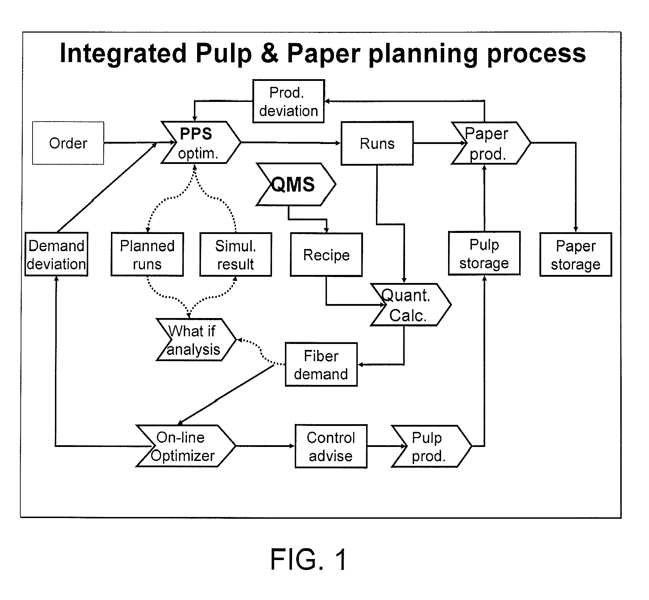

Per-Olof Sahlin has also discussed, in "Integrated Planning and Optimization of Pulp and paper Production", Proceedings of IPPTF 2006-International Pulp, Paper and Tissue Forum, October 2006 that pulp and paper production planning are combined. At the conference, which was held in Pribaltiiskaya Hotel, St Petersburg, Russia, October 10 - 13, the author of the article also showed a slide, which is depicted in fig. 1. In this slide there is shown a paper production planning unit (PPS) that receives an order and provides runs for a paper production (Paper prod.). A QMS entity provides a recipe to a quantity calculating unit Quant Calc, which in turn supplies fiber demand to a pulp production planning unit (online Optimizer). The pulp production planning unit in turn provides a demand deviation to the paper production planning unit (PPS) as well as control advice for a pulp production (Pulp prod.). Also the paper production provides production deviations (Prod. deviation) to the paper production planning unit (PPS). The slide furthermore shows elements like a Pulp storage provided in-between Pulp prod. and Paper prod. as well as a Paper storage associated with Paper prod. Finally a number of boxes show planned runs, simulation results (Simul. Result) and What-if analysis in relation to PPS. At the conference the author mentioned that the PPS schedules the paper machine production based on the current order stock and calculates the required raw material demand, while the Optimizer simulates the complete mass balance in a pulp mill and suggests optimal set point trajectories for the different process areas. He further mentioned that the process starts with an order, that the order stock is scheduled into runs by the PPS and that the fiber demand is calculated through recipes available via a Quality Management System (QMS). He also mentioned that the calculated fiber demand is then fed to the On-line Optimizer, which goes on and suggests optimal set point trajectories for the different process sections in the pulp production. Finally he mentioned that if disturbances or deviations occur PPS will recalculate run schedules to the current situation.

All this prior art therefore give an indication that it would be desirable to combine the planning and control processes for paper and pulp productions, but give no real information about how this should be done. There is therefore a need for an improved combined control of different production processes provided in different production environments.

SUMMARY OF THE INVENTION

The present invention is therefore directed towards providing an improved combined process control of processes provided in different production environments.

One object of the present invention is therefore to provide an improved method for controlling a first production process in a first production environment, which produces material for use in a second production process in a second production environment.

This object is according to a first aspect of the present invention achieved through a method for controlling a first production process in a first production environment, which produces material for use in a second production process in a second production environment, comprising the steps of:

receiving, from the second production environment, a request for a first delivery rate of a first material during a first time period to the second production environment,

determining, in the first production environment, if the first delivery rate of the first material can be provided or not during the first time period,

generating in the first production environment, if the requested first delivery rate of the first material cannot be provided during the first time period, an indication of the capacity of the first production environment regarding the first material comprising at least one delivery rate of the first material that can be provided to the second production environment, sending the indication to the second production environment,

receiving, from the second production environment, a request for at least one second delivery rate of the first material during a second time period lying within the capacity provided in the indication, and

controlling, in the first production environment, the first process to produce the first material at a rate of production that enables supply of the first material at the second delivery rate during the second time period to the second production environment for allowing the second process to produce an output product.

Another object of the present invention is to provide an improved device for controlling a first production process in a first production environment, which produces material for use in a second production process in a second production environment.

This object is according to a second aspect of the present invention achieved through a device for controlling a first production process in a first production environment, which produces material for use in a second production process in a second production environment, comprising:

a production planning unit configured to

receive, from the second production environment, a request for a first delivery rate of a first material during a first time period to the second production environment,

determine if the first delivery rate of the first material can be provided or not during the first time period,

generate, if the requested first delivery rate of the first material cannot be provided during the first time period, an indication of the capacity of the first production environment regarding the first material comprising at least one delivery rate of the first material that can be provided to the second production environment,

send the indication to the second production environment, and

receive, from the second production environment, a request for at least one second delivery rate of the first material during a second time period lying within the capacity provided in the indication, and

a production control unit configured to

control the first process to produce the first material at a rate of production that enables supply of the first material at the second delivery rate during the second time period to the second production environment for allowing the second process to produce an output product.

Another object of the present invention is to provide a computer program product that provides improved control of a first production process in a first production environment, which produces material for use in a second production process in a second production environment.

This object is according to a third aspect of the present invention also achieved through a computer program product for controlling a first production process in a first production environment, which produces material for use in a second production process in a second production environment, comprising computer program code to make a computer perform when the code is loaded into the computer:

receive, from the second production environment, a request for a first delivery rate of a first material during a first time period to the second production environment,

determine if the first delivery rate of the first material can be provided or not during the first time period,

generate, if the requested first delivery rate of the first material cannot be provided during the first time period, an indication of the capacity of the first production environment regarding the first material comprising at least one delivery rate of the first material that can be provided to the second production environment,

send the indication to the second production environment,

receive, from the second production environment, a request for at least one second delivery rate of the first material during a second time period lying within the capacity provided in the indication, and

control the first process to produce the first material at a rate of production that enables supply of the first material at the second delivery rate during the second time period to the second production environment for allowing the second process to produce an output product.

Another object of the present invention is to provide an improved method for controlling a second production process in a second production environment based on material produced by a first production process in a first production environment.

This object is according to a fourth aspect of the present invention achieved through a method for controlling a second production process in a second production environment, based on material produced by a first production process in a first production environment, comprising the steps of:

determining, in the second production environment, a first delivery rate of a first material to be received from the first production environment during a first time period,

sending, from the second production environment, a request for the first delivery rate of the first material during the first time period to the first production environment,

receiving, in the second production environment from the first production environment, if the first delivery rate of the first material cannot be provided from the first production environment during the first time period, an indication of the capacity of the first production environment regarding the first material comprising at least one delivery rate of the first material that can be provided from the first production environment,

determining, in the second production environment, at least one second delivery rate of the first material and a second time period lying within the capacity provided in the indication,

sending, from the second production environment, a request for the second delivery rate of the first material during the second time period to the first production environment, and

adding, in the second production environment, the first material in the second production process during the control of this second production process according to the second delivery rate during the second time period, in order to produce an output product.

Another object of the present invention is to provide an improved device for controlling a second production process in a second production environment based on material produced by a first production process in a first production environment.

This object is according to a fifth aspect of the present invention achieved through a device for controlling a second production process in a second production environment based on material produced by a first production process in a first production environment, comprising:

a production planning unit configured to

determine a first delivery rate of a first material to be received from the first production environment during a first time period,

send a request for the first delivery rate of the first material during the first time period to the first production environment,

receive, from the first production environment, if the first delivery rate of the first material cannot be provided from the first production environment during the first time period, an indication of the capacity of the first production environment regarding the first material comprising at least one delivery rate of the first material that can be provided from the first production environment,

determine at least one second delivery rate of the first material and a second time period lying within the capacity provided in the indication,

send a request for the second delivery rate of the first material during the second time period to the first production environment, and

a production control unit configured to

add the first material in the second production process during the control of this second production process according to the second delivery rate during the second time period, in order to produce an output product.

Yet another object of the present invention is to provide a computer program product that provides improved control of a second production process in a second production environment based on material produced by a first production process in a first production environment.

This object is according to a sixth aspect of the present invention also achieved through a computer program product for controlling a second production process in a second production environment based on material produced by a first production process in a first production environment, comprising computer program code to make a computer perform when the code is loaded into the computer:

determine a first delivery rate of a first material to be received from the first production environment during a first time period,

receive, from the first production environment, if the first delivery rate of the first material cannot be provided from the first production environment during the first time period, an indication of the capacity of the first production environment regarding the first material comprising at least one delivery rate of the first material that can be provided from the first production environment,

determine at least one second delivery rate of the first material and a second time period lying within the capacity provided in the indication,

send a request for the second delivery rate of the first material during the second time period to the first production environment, and

add the first material in the second production process during the control of this second production process according to the second delivery rate during the second time period, in order to produce an output product.

Another object of the present invention is to provide an improved system of production environments.

This object is according to a seventh aspect of the present invention achieved through a system of production environments comprising:

a first production environment providing a first production process, and

a second production environment providing a second production process,

wherein the first production environment includes a device for controlling the first production process, which produces material for use in the second production process and having,

a production planning unit configured to receive, from the second production environment, a request for a first delivery rate of a first material during a first time period to the second production environment,

determine if the delivery rate of the first material can be provided or not during the first time period,

generate, if the requested first delivery rate of the first material cannot be provided during the first time period, an indication of the capacity of the first production environment regarding the first material comprising at least one delivery rate of the first material that can be provided from the first production environment,

send the indication to the second production environment, and

receive, from the second production environment, a request for at least one second delivery rate of the first material during a second time period lying within the capacity provided in the indication,

a production control unit configured to control the first process to produce the first material at a rate of production that enables supply of the first material at the second delivery rate during the second time period to the second production environment, and

the second production environment includes a device for controlling the second production process having

a production planning unit configured to determine the first delivery rate of the first material and the first time period,

send the request for the first delivery rate of the first material during the first time period,

receive the indication, if the first delivery rate of the first material during the first time period cannot be provided from the first production environment,

determine the second delivery rate of the first material and the second time period,

sending the request for the second delivery rate of the first material

during the second time period to the first production environment, and

a production control unit configured to add the first material in the second production process during the control of this second production process according to the second delivery rate during the second time period, in order to produce an output product.

The present invention has many advantages. It allows production of an output product from one production environment to be based also on the capacity of another production environment, which produces input material for the process where the output product is produced. In this way the total production can be optimised. This allows costs to be minimised and thus provides an improved production planning. By using a delivery rate for communicating requested material and capacity the determination of the material delivery is furthermore adapted to the production process control and is easier to integrate in a production environment.

It should be emphasized that the term "comprises/comprising" when used in this specification is taken to specify the presence of stated features, integers, steps or components, but does not preclude the presence or addition of one or more other features, integers, steps, components or groups thereof.

BRIEF DESCRIPTION OF THE DRAWINGS

The present invention will now be described in more detail in relation to the enclosed drawings, in which:

fig. 1 schematically shows a slide that has been publicly presented of integrated pulp and paper planning processes,

fig. 2 shows a block schematic of a system of three production plants that are connected to each other,

fig. 3 shows a flow chart outlining a number of method steps for controlling one of the plants in fig. 2,

fig. 4 shows a flow chart outlining a number of method steps for controlling another of the plants in fig. 2 in relation to the plant controlled according to the method steps of fig. 3, and

fig. 5 schematically shows a computer program product in the form of a CD ROM disc comprising computer program code for carrying out the invention.

DETAILED DESCRIPTION OF EMBODIMENTS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

Fig. 1 schematically shows a slide made in a presentation of an integrated pulp & paper planning process made integrated planning made at IPPTF 2006 - International Pulp, Paper and Tissue Forum, October 2006 and described in the prior art section.

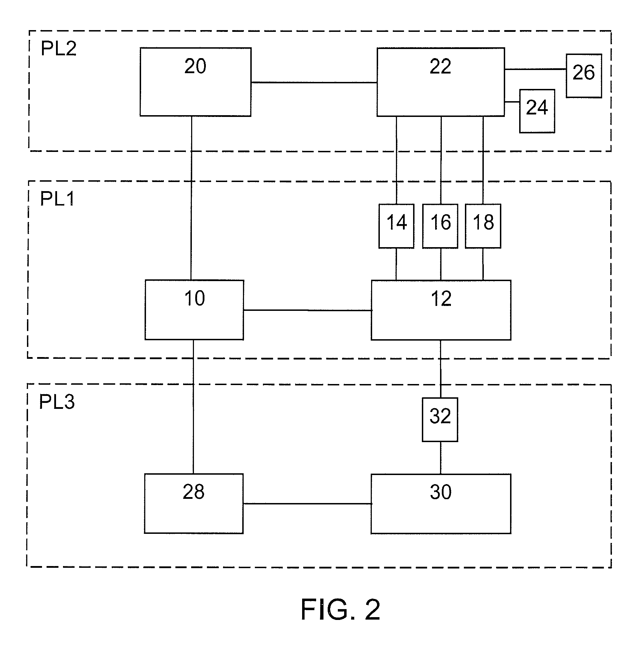

Fig. 2 shows a block schematic of a system of production environments according to the present invention in the form of production plants. In fig. 2 there are shown three production environments in the form of separate production plants PL1, PL2, PL3, where each plant produces at least one product. The plant at the bottom of fig. 2 here produces input material for the production plant PL1 in the middle of the figure, while the production plant PL1 in the middle of the figure produces input material for the plant PL2 at the top of the figure PL2. The invention will in the following be described in relation to wood chip, pulp and paper production, and thus the plants shown in fig. 2 are a wood chip production plant PL3, a pulp production plant PL1 and a paper production plant PL2. The invention is however not limited to these types of production plants, but may for instance also be applied for a metal production process, for instance a steel production process, that is based on iron ore production. The invention is furthermore not limited to being used for three plants, but can be used with only two plants or depending of the processes involved also further plants and production steps.

In fig.2 there is thus shown a first plant PL1, which is here a pulp production plant running at least one first production process, which is thus here a pulp production process. The first plant PL1 includes a first process planning unit 10 which is connected to a first process control unit 12. The first process planning unit 10 is arranged to provide general production planning, like optimising the production according to various optimising parameters, simulate the process and informing the process production of what is to be produced and how it is to be produced, while the first process control unit 12 is provided for performing the actual process control, like mixing different materials, adding additives and regulating temperatures etc. The results of one process or rather of different similar processes are then supplied to material stores 14, 16 and 18. In fig. 2 there are shown three such material stores 14, 16, and 18 which are used to indicate that different output materials can be provided. In the present case these different materials are different types of pulp. In order to simplify matters the actual process and various entities used for controlling the process are not shown. However these are controlled by the process control unit 12, which is indicated in fig. 2 through the stores being connected to the first process control unit 12. Such control is however well known within the art and need not be further described here. As indicated above there may thus be several parallel pulp producing processes, where only three are indicated by the provision of three stores 14, 16 and 18. However, more but also fewer are possible.

The first process planning unit 10 is connected to a second process planning unit 20 provided in the second production plant PL2. The second production plant PL2 is here a paper production plant running at least one second production process, which is thus here a paper production process. The second process planning unit 20 is connected to a second process control unit 22, which controls the second process. The second process planning unit 20 is arranged to provide general production planning, like informing the second process control unit 22 of what is to be produced and how it is to be produced, while the second process control unit 22 is provided for performing the actual process control, like mixing different materials, adding additives and regulating temperatures etc. In order to do this the second process control unit 22 is connected to the stores 14, 16 and 18 of the second plant PL2 in order to be able to receive material produced in the first process in the first plant PL1 and provide it to the various second processes for producing final output products. Output products are here provided in output stores 24 and 26, where these stores can be provided for different types of qualities of the output product. In the case of paper there can be different kinds of qualities or grades which are provided based on different kinds of pulp. In order to simplify the structure also the second process control unit 22 is shown as being connected to the output stores 24 and 26 while the actual process is not shown. As indicated by the existence of two output stores 24 and 26, there may exist several paper production processes in the second plant PL2.

The first process planning unit 10 is also connected to a third process planning unit 28 in the third production plant PL3. The third production plant PL3 is here a wood chip production plant running a third production process, which is thus here a wood chip production process. The third process planning unit 28 is here connected to a third process control unit 30. The third process planning unit 28 is arranged to provide general production planning, like informing the third process control unit 30 of what is to be produced and how it is to be produced, while the third process control unit 30 is provided for performing the actual process control, like mixing different materials, adding additives regulating temperatures, controlling production rates etc. In order to supply the results of the process, here wood chip, the third process control unit 30 is connected to a material store 32. Also the first process control unit 12 of the first plant PL1 is connected to this store 32 of the third plant PL3.

Finally it should be noted that the combination of production planning unit and production control unit in a plant together make up a device for controlling the process of the corresponding plant.

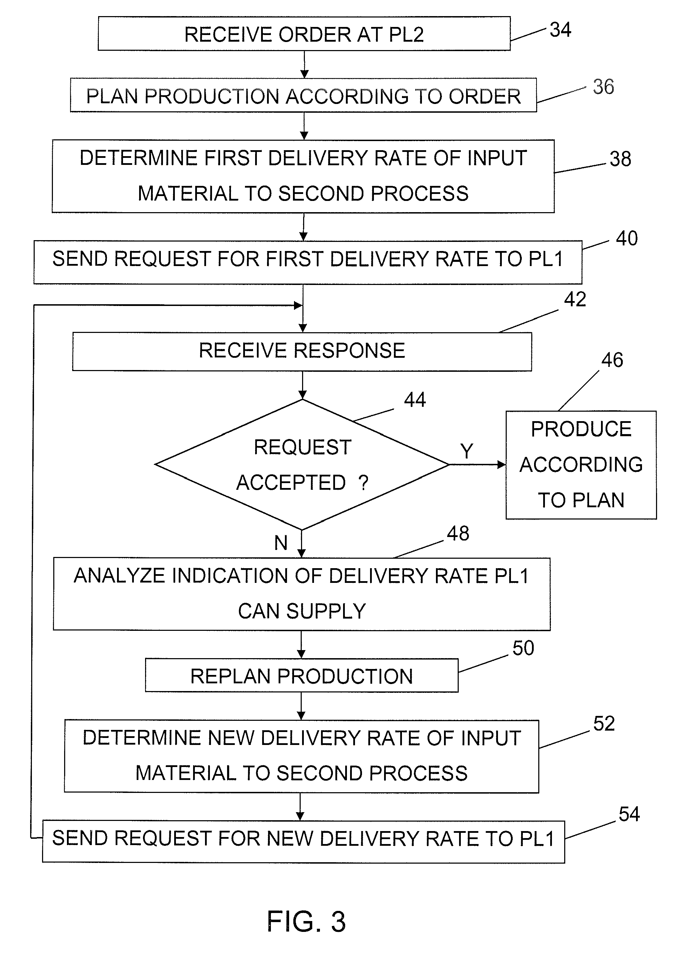

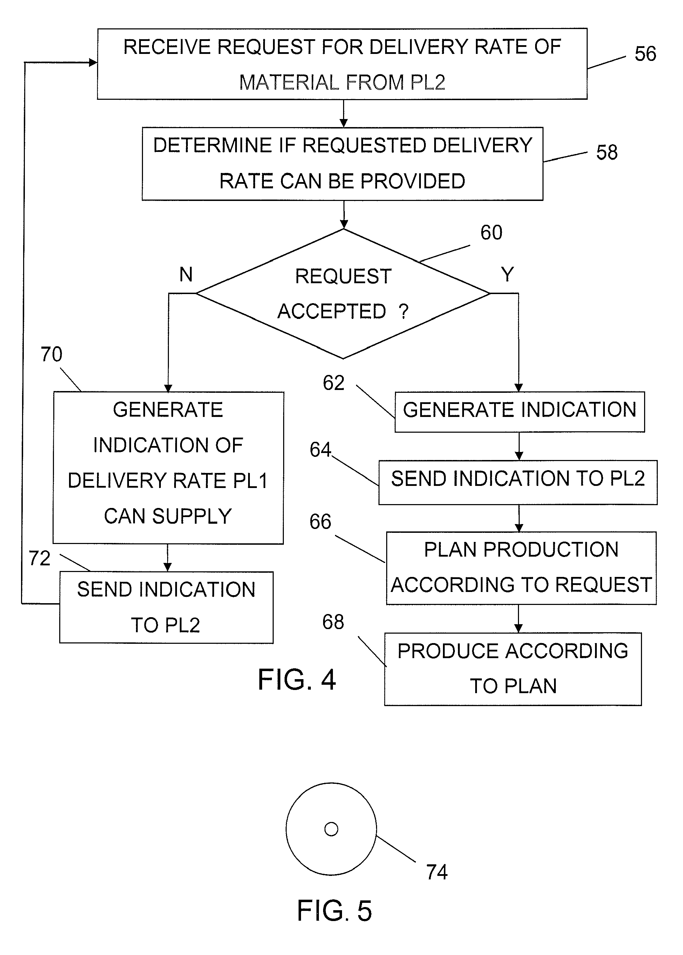

Now the functioning of a system according to an embodiment of the present invention will be described in relation to fig. 2, 3 and 4, where fig. 3 shows a flow chart outlining a number of method steps for controlling the second production plant and fig. 4 shows a flow chart outlining a number of method steps for controlling the first production plant PL1. In order to simplify the description the invention will first be described in relation to the first and second production plants PL1 and PL2 and in relation to one output product that is only made of one material, in the following denoted first material. In the case of an output product being a paper, this paper is normally produced from several different types of pulps. It is furthermore possible to produce different types of papers, being produced with different proportions of different types of the same pulps and where at least some types of pulp may be used in only one or a few of the papers. The principles laid out below are applicable for these situations too.

Everything starts with the reception of orders for paper in the second production plant PL2, step 34. The orders are received by the second production planning unit 20, which then schedules these orders into runs, where a run is typically a cycle in the plant in which one type of paper is produced. In this way the production of the output product is planned according to the received orders, step 36. Thereafter the second production planning unit 20 determines a first delivery rate of the first material during a first time period that is needed for producing the output product, step 38. The first material is thus input material for the second process. This determination is normally done through investigating the recipe for the specific output product, the production capacity of the plant and how much output product it is desired to produce. It may also include an optimisation of the production based on a model function describing the mass balance in the second process while considering production constraints. Thereafter the second product planning unit 20 sends a request for the first delivery rate to the first production plant PL1, step 40. This is accompanied with an indication of the duration of the supply at this rate, which duration thus makes up the first time period.

This request is received by the first production planning unit 10 in the first plant PL1, step 56. The first production planning unit 10 then determines if the requested first delivery rate during the first time period can be provided or not, step 58. The determination considers constraints such as maximum production rate in the first process, the level of already produced first material in a material store 14, the maximum delivery rate of first material from this store 14. Based on this information the first production planning unit 10 then determines if the requested first delivery rate can be supplied or not during the first time period, step 58, and then generates an indication that either indicates the capacity, step 70, or that the first delivery rate during the first time period is acceptable, step 62, and sends the indication as a response to the second production planning unit 20, steps 64 and 72.

The response is then received by the second production planning unit 20, step 42, and if the request was accepted, i.e. the indication was an indication of acceptance, step 44, the second production planning unit 20 informs the first process planning unit 10 of when the first material is to be supplied and for how long. The first production planning unit 10 then plans the production for providing the requested rate during the requested time period, step 66. It then goes ahead and orders the first process control unit 12 to go ahead and produce the first material according to the plan at a time that will enable the supply of the first material to the second plant PL2 at the given rate and duration and starting at the time indicated by the second process planning unit 20, step 66. In this way the first process control unit 12 controls the first process to produce the first material at a rate of production that enables supply of the first material at the first delivery rate during the first time period to the second production environment PL2. At the same time the second production planning unit 20 orders the second process control unit 22 to produce the output product according to the plan made for this second process, step 46. Thus the second production control unit (22) adds the first material according to the first delivery rate during the first time period to the second production process during the control of this second process, in order to produce an output product. In the production the first process control unit 12 controls the first process through providing input material in the form of wood chips from store 32 and producing the first material in the form of pulp and supplying it to store 14. From this store 14 the pulp is then taken into the second process by either the second process control unit 22 or the first process control unit 12 and the output product is produced (here paper) and supplied to store 24.

If however the request was not accepted in the first plant, step 60, the first production planning unit 10 generates an indication of the capacity of the first production plant PL1, step 70. This indication of the capacity may be based on constraints such as maximum production rate in the first process, the level of already produced first material that is pre-stored in a material store 14, the maximum delivery rate of first material from this store 14. It may in its simplest form be provided as a delivery rate of the first material that the first production plant PL1 can produce for the second process. In this case the indication may only be based on the production capacity in the first plant PL1 and thus only include an indication of the delivery rate that is possible because of the production rate. As an alternative the indication may include one delivery rate that is based on both the production capacity of the first plant PL1 as well as the capacity of delivery related to available pre-stored material, for instance already produced material in the store 14. This means that any already produced material in the store 14 is considered and an indication of the delivery rate that can be provided is generated based on a combination of the delivery rate from the store and a production rate from the first process. It is here possible to also or instead consider pre-stored material that needs treatment before being delivered, for instance material that has been bought from an external supplier or previously produced and processed for efficient storing, which in the present example may be dried pulp that needs to be solved in water. This means that pre-stored material needing treatment may be considered in the determination of the capacity. This treatment therefore involves delivery rate constraints that are considered when determining the capacity. The indication may also provide a duration within which this rate is possible to provide. In the determination of the capacity an object function is optimised. It is also possible that the indication includes more than one delivery rate and the duration of at least some of these rates. Here it is possible that one rate is associated with the delivery rate from the store 14 and the duration of this rate, while another is associated with the delivery rate directly from the process, where the duration of the rate from the store 14 may be given as the time to empty the store 14 while considering the supply of new first material from the first process to this store. This indication is thus generated, step 70, and then sent to the second production planning unit 20, step 72.

As the second production planning unit 20 receives the response, step 42, it thus sees that the request was not accepted, step 44, and therefore analyses the received indication, step 48. Based on the indication it now re-plans the production in line with what the first system can deliver, i.e. limited to the constraints in the indication, step 50, and determines a new second delivery rate of first material to the second process during a second time period, step 52, then sends a request for this new second rate during the second time period to the first production planning unit 10, step 54, and receives the response, step 42. If the first production planning unit now accepts, steps 44, 60, the first production planning unit 10 plans the production of the first material, step 66, and then both the first and second process control units 12 and 22 control their respective processes according to plan, steps 46 and 68. Here the first production control unit 12 controls the first process for providing the new second delivery rate of first material during the second time period to the second process and the second process control unit 22 adds the first material, which it receives from store 14 during the control of the second process according to the second delivery rate during the second time period. Thus the first production control unit 12 controls the first process to produce the first material at a rate of production that enables supply of the first material at the second delivery rate during the second time period to the second production environment PL2 and the second production control unit 22 adds the first material in the second production process during the control of this second production process according to the second delivery rate during the second time period, in order to produce the output product. This output product is thus an end product.

If also this new second requested delivery rate during the second time period cannot be provided a new indication is generated, step 70 and sent to the second plant PL2, step 72. In this way the method is continued until a delivery rate during a time period is requested which the first plant PL1 is able to deliver at.

As indicated through the existence of stores 16 and 18, the above mentioned method steps can be performed for further materials produced in the first plant, i.e. for further grades of pulp in the present example.

The above described invention has a number of advantages. It allows production of an output product from one production environment to be based also on the capacity of another production environment which produces input material for the process where the output product is produced. In this way the total production can be optimised. This allows costs to be minimised and thus provides an improved production planning. By using a delivery rate for communicating requested material and capacity the determination of the material delivery is furthermore adapted to the production process control and is easier to integrate in a production environment.

If the indication of capacity only includes one delivery rate and a corresponding time period, it is possible that the method described above can be varied in that the second process planning unit directly accepts this delivery rate and the duration as the second delivery rate and second time period. Then it is not necessary to send a new request for the second delivery rate and second time period, but this rate and time period are applied directly by both the first and second production planning units.

It is possible to apply the above described functionality also between the first and third plants PL1 and PL3, in that the first process control unit 10 sends request for delivery rates of a second material (here wood chip) during certain time periods to the third production planning unit 28, which requests are based, at least partly, on the requested delivery rates of first material and durations received from the second production plant PL2. The third production planning unit 28 would then in the same way as the first production planning unit 10 above provide an indication of the capacity including one or more delivery rates of the second material that it can provide. The first production planning unit 10 would then also consider these indications in the same way as the second production planning unit 20 did above and the influence they have on the first production process when determining the delivery rate and duration of first material it can provide to the second production process.

The production planning and determination of rates of delivery, both requested and possible to supply, may be performed through using a dynamic matrix model of each process in question and then especially the first and perhaps also of the second process. This model is a model of the mass balance in the process, which may be expressed as

$$F[x(t), \dot{x}(t), u(t), t] = 0,$$

Where x denotes state variables, u manipulated variables and x time derivates of state variables. Manipulated variables are here typically those variables that can be influenced by a control system in order to provide control, whereas state variables are variables indicative of the state of the process. Some of these state variables are process output variables, such as the produced rate of first material per time unit. Measurements and estimation of measurable and derivable process output variables can be expressed as

$$y(t) = g(x(t),t)$$

This means that a measured output variable y may have a functional relationship g with a state variable x.

The model is also associated with model constraints, e.g. limits for different manipulated variables and/or process output variables:

$$a \leq u_k \geq b$$

$$d \leq x_k \geq e$$

There might also be different more or less complex inequality constraints:

$$C_k (x_k, u_k) \leq 0$$

Constraints can here be buffer levels, production rates and quality properties from lab or process instruments.

By using the dynamic model with measured present and perhaps also previous process output variables as parameters, a present or initial state of the process may be estimated.

The state estimation is here carried out using moving horizon estimation (MHE) applied on the above mentioned function with the above mentioned constraints. Thereby a range of set points in the form of target trajectories for the selected controlled process output variables are formulated. The current constraints that are at hand or will occur during the prediction horizon must here be known.

The state estimation is performed based on the output variables.

After a state has been estimated, an optimization follows regarding meeting an optimal performance in a process.

Optimising can either be performed through finding the optimal future production targets based on the current state or based on a created scenario like changed fiber demand in the paper production.

Optimising based on the model above is carried out through minimising an objective function. The objective function is formulated in accordance with the optimising aspects while considering the constraints and is preferably based on a comparison between the target trajectories of the controlled output process variables and controlled process output variables as predicted by the dynamic process model. The optimising can then generally be described as

$$\text{The minimum of } g(x) = \int x(t) \, dt.$$

Thereby optimised target trajectories or a range of set points are obtained which can be used for control.

The objective function is formulated in accordance with the optimizing aspects and is preferably based on a comparison between the target set of set points of the controlled process output variables and controlled process output variables as predicted but the dynamic process model. The computation is based on present values of state variables. The objective function is minimized by varying the input trajectories for the manipulated variables. The input trajectories giving the minimum of the objective function is thereby stated to be the optimum input trajectories.

These optimised input trajectories are then used for controlling the process controllable variables. The principles outlined above are described in further detail in WO 03/107103, which is herein incorporated by reference.

It is also possible to make different simulations of the process in order to determine different delivery rates.

The production planning units 10, 20, 28 and process control units 12, 22 and 30 of each plant are preferably provided in one or more corresponding computers comprising one or more processors together with computer program code for performing the corresponding method steps. The program code mentioned above may also be provided as a computer program product, for instance in the form of one or more data carriers carrying computer program code for performing the functionality of the present invention when being loaded into the computer. One such carrier 74, in the form of a CD ROM disc is generally outlined in fig. 5. It is however feasible with other data carriers. The computer program code can furthermore be provided as pure program code on an external server and downloaded to the devices for controlling processes in fig. 1.

A production environment is here an environment where one type of product is produced. Above such an environment is exemplified as a separate plant. It should however be realised that such plants may be co-located and even combined so that one plant may provide several production environments. Furthermore, the various rates, durations and capacities were above described as being provided during the planning of production. It should be realised that requests for delivery rates and durations and indications of the capacity may be exchanged between the above described entities also during production in order to dynamically change the production. From the above made description it is clear that the invention can be used for combining only two processes or three processes. It should however be realised that the principles of the present invention can be applied also for even more processes. In the paper example given above it is for instance possible to add a forestry process that provides input material to the wood chip process.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the present invention is only to be limited by the following claims.

**Claims**

1. Method for controlling a first production process in a first production environment (PL1), which produces material for use in a second production process in a second production environment (PL2), comprising the steps of:

   receiving (56), from the second production environment (PL2), a request for a first delivery rate of a first material during a first time period to the second production environment (PL2), determining (58), in the first production environment (PL1), if the first delivery rate of said first material can be provided or not during said first time period, generating (70) in the first production environment (PL1), if the requested first delivery rate of the first material cannot be provided (58, 60) during said first time period, an indication of the capacity of the first production environment regarding said first material comprising at least one delivery rate of said first material that can be provided to the second production environment (PL2), sending (72) said indication to the second production environment (PL2), receiving (56), from the second production environment (PL2), a request for at least one second delivery rate of said first material during a second time period lying within the capacity provided in said indication, and controlling (68), in the first production environment (PL1), the first process to produce said first material at a rate of production that enables supply of said first material at said second delivery rate during said second time period to the second production environment (PL2) for allowing the second process to produce an output product.

2. Method according to claim 1, further comprising the steps of
   determining (38), in the second production environment (PL2), said first delivery rate of said first material to be received from the first production environment during said first time period,
   sending (40), from said second production environment (PL2), said request for said first delivery rate of said first material during said first time period to the first production environment (PL1),
   receiving (42), in the second production environment (PL2) from the first production environment (PL1), said indication of the capacity of the first production environment (PL1),
   determining (52), in the second production environment (PL2), said second delivery rate of said first material and said second time period lying within the capacity provided in said indication,
   sending (54), from said second production environment (PL2), said request for said second delivery rate of said first material during said second time period to the first production environment (PL1), and
   adding (46), in the second production environment (PL2), said first material in the second production process during the control of this second production process according to said second delivery rate during said second time period.

3. Method according to claim 1 or 2, further comprising the step of determining the capacity through considering production capacity, an amount of available pre-stored material and the delivery rate of this pre-stored material.

4. Method according to claim 3, wherein the determination of the capacity is also based on delivery rate constraints relating to treatment of pre-stored material.

5. Method according to any previous claim, further comprising the step of generating (62), in the first production environment (PL1), if a requested material delivery rate during a time period can be provided (58, 60), an indication (62) that the requested material delivery rate during said time period can be provided for the second production environment (PL2).

6. Method according to any previous claim, wherein there is at least one further production process producing further material in the first production environment (PL1), each production process of the first production environment (PL1) produces a different material to be used in the second production environment (PL2) and said steps of receiving a request for a delivery rate of a material during a time period from the second production environment (PL2), determining if the delivery rate of said material can be provided or not during this time period, generating, if the requested delivery rate during said time period cannot be provided, an indication of the capacity of the first production environment regarding said material, sending said indication to the second production environment, receiving a determination of a further material delivery rate during a time period lying within the capacity and controlling the corresponding further production process for providing said material at the further delivery rate during the corresponding time period to the second production environment (PL2) are performed for each such further material.

7. Method according to any previous claim, further comprising the steps of determining, in the first production environment (PL1), a first delivery rate of a second material during a third time period from a third production environment (PL3), sending, from said first production environment (PL1), a request for said first delivery rate of said second material during said third time period to the third production environment (PL3), receiving, in the first production environment (PL1) from said third production environment (PL3), if said first delivery rate of said second material cannot be provided from said third production environment (PL3) during said third time period, an indication of the capacity of said third production environment (PL3) comprising at least one delivery rate of said second material that can be provided to the first production environment (PL1) from said third production environment (PL3), determining, in the first production environment (PL1), at least one second delivery rate of said second material during a fourth time period lying within the capacity provided in said indication from said third production environment (PL3), sending, from said first production environment (PL1), a request for said second delivery rate of said second material during said fourth time period to the third production environment (PL3), basing the determining of if the first delivery rate of said first material can be provided or not during said first time period and the generation of said indication of the capacity of the first production environment (PL1) regarding said first material that can be supplied to the second production environment (PL2) also on the indication supplied by said third production environment (PL3), and adding, in the first production environment (PL1), said second material in the first production process during the control of this first production process according to said second delivery rate of said second material during said fourth time period, in order to produce said first material.

8. Method according to claim 7, further comprising the steps of receiving, in said third production environment (PL3) from the first production environment (PL1), the request for said first delivery rate of said second material during said third time period, determining, in said third production environment (PL3), if the delivery rate of said second material during said third time period can be provided or not, generating, in said third production environment (PL3) if the requested first delivery rate of said second material cannot be provided during said third time period, an indication of the capacity of said third production environment (PL3) comprising at least one delivery rate of said second material that can be provided to the first production environment (PL1), sending said indication to the first production environment (PL1), receiving, from the first production environment (PL1), said request for a second delivery rate of said second material during said fourth time period, and controlling, in said third production environment (PL3), the third process for supplying said second material according to the second delivery rate during said fourth time period to the first production environment (PL1).

9. Device (10, 12) for controlling a first production process in a first production environment (PL1), which produces material for use in a second production process in a second production environment (PL2), comprising:

a production planning unit (10) configured to receive, from the second production environment (PL2), a request for a first delivery rate of a first material during a first time period to the second production environment (PL2), determine if the first delivery rate of said first material can be provided or not during said first time period, generate, if the requested first delivery rate of the first material cannot be provided during said first time period, an indication of the capacity of the first production environment regarding said first material comprising at least one delivery rate of said first material that can be provided to the second production environment (PL2), send said indication to the second production environment (PL2), and receive, from the second production environment (PL2), a request for at least one second delivery rate of said first material during a second time period lying within the capacity provided in said indication, and a production control unit (12) configured to control the first process to produce said first material at a rate of production that enables supply of said first material at said second delivery rate during said second time period to the second production environment (PL2) for allowing the second process to produce an output product.

**10.** Device (10, 12) according to claim 9, wherein said production planning unit (10) is further configured to determine said capacity through considering production capacity, an amount of available pre-stored material and the delivery rate of this pre-stored material.

**11.** Device (10, 12) according to claim 10, wherein said production planning unit (10), when being configured to determine said capacity is configured to base the determination of the capacity also on delivery rate constraints relating to treatment of pre-stored material.

**12.** Device (10, 12) according to any of claims 9 - 11, wherein said production planning unit (10) is further configured to generate, if a requested material delivery rate during a time period can be provided, an indication that the requested material delivery rate during said time period can be provided for the second production environment (PL2).

**13.** Device (10, 12) according to any of claims 9 - 12, wherein there is at least one further production process producing material in the first production environment (PL1), each production process of the first production environment (PL1) produces a different material to be used in the second production environment (PL2) and for each such further material said production planning unit (10) is configured to receive a request for a delivery of a further material during a time period from the second production environment (PL2), determine if the delivery rate of said further material during this time period can be provided or not, generate, if the requested delivery rate cannot be provided during said time period, an indication of the capacity of the first production environment (PL1) regarding said further material, send said indication to the second production environment (PL2) and receive a determination of a second material delivery rate during a time period lying within the capacity, and for each such further material said production control unit (12) is further configured to control the corresponding further production process for providing said material at the second delivery rate during the corresponding time period to the second production environment (PL2).

**14.** Device (10, 12) according to any of claims 9 - 13, wherein the production planning unit (10) is further configured to

determine a first delivery rate of a second material during a third time period from a third production environment (PL3),

send a request for said first delivery rate of said second material during said third time period to the third production environment (PL3),

receive, from said third production environment (PL3), if said first delivery rate of said second material cannot be provided from said third production environment (PL3) during said third time period, an indication of the capacity of said third production environment (PL3) comprising at least one delivery rate of said second material that can be provided from said third production environment (PL3),

determine at least one second delivery rate of said second material during a fourth time period lying within the capacity provided in said indication from said third production environment (PL3),

send a request for said second delivery rate of said second material during said fourth time period to the third production environment (PL3), and

base the determining of if the first delivery rate of said first material can be provided or not during said first time period and the generation of said indication of the capacity of the first production environment (PL1) regarding said first material that can be supplied to the second production environment (PL2) also on the indication supplied by said third production environment (PL3),

whereby said production control unit (12) is further configured to add said second material in the first production process during the control of this first production process according to said second delivery rate of said second material during said fourth time period. In order to produce said first material.

**15.** Computer program product (70) for controlling a first production process in a first production environment (PL1), which produces material for use in a second production process in a second production environment (PL2), comprising computer program code to make a computer (10, 12) perform when said code is loaded into said computer (10, 12):

receive, from the second production environment (PL2), a request for a first delivery rate of a first material during a first time period to the second production environment (PL2),

determine if the first delivery rate of said first material can be provided or not during said first time period,

generate, if the requested first delivery rate of the first material cannot be provided during said first time period, an indication of the capacity of the first production environment (PL1) regarding said first material comprising at least one delivery rate of said first material that can be provided to the second production environment (PL2),

send said indication to the second production environment (PL2),

receive, from the second production environment (PL2), a request for at least one second delivery rate of said first material during a second time period lying within the capacity provided in said indication, and

control the first process to produce said first material at a rate of production that enables supply of said first material at said second delivery rate during said second time period to the second production environment (PL2) for allowing the second process to produce an output product.

16. Method for controlling a second production process in a second production environment (PL2) based on material produced by a first production process in a first production environment (PL1), comprising the steps of:

> determining (38), in the second production environment (PL2), a first delivery rate of a first material to be received from the first production environment (PL1) during a first time period,
> sending (40), from said second production environment (PL2), a request for said first delivery rate of said first material during said first time period to the first production environment (PL1),
> receiving (42), in the second production environment (PL2) from the first production environment (PL1), if the first delivery rate of the first material cannot be provided from the first production environment (PL1) during said first time period, an indication of the capacity of the first production environment (PL1) regarding said first material comprising at least one delivery rate of said first material that can be provided from the first production environment (PL1), determining (52), in the second production environment (PL2), at least one second delivery rate of said first material and a second time period lying within the capacity provided in said indication,
> sending (54), from said second production environment (PL2), a request for said second delivery rate of said first material during said second time period to the first production environment (PL1), and
> adding (46), in the second production environment (PL2), said first material in the second production process during the control of this second production process according to said second delivery rate during said second time period, in order to produce an output product.

17. Device (20, 22) for controlling a second production process in a second production environment (PL2) based on material produced by a first production process in a first production environment (PL1), comprising:

> a production planning unit (20) configured to determine a first delivery rate of a first material to be received from the first production environment (PL1) during a first time period, send a request for said first delivery rate of said first material during said first time period to the first production environment (PL1), receive, from the first production environment (PL1), if the first delivery rate of said first material cannot be provided from the first production environment (PL1) during said first time period, an indication of the capacity of the first production environment (PL1) regarding said first material comprising at least one delivery rate of said first material that can be provided from the first production environment (PL1), determine at least one second delivery rate of said first material and a second time period lying within the capacity provided in said indication, send a request for said second delivery rate of said first material during said second time period to the first production environment (PL1), and a production control unit (22) configured to add said first material in the second production process during the control of this second production process according to said second delivery rate during said second time period, in order to produce an output product.

18. Computer program product (74) for controlling a second production process in a second production environment (PL2) based on material produced by a first production process in a first production environment (PL1), comprising computer program code to make a computer (20, 22) perform when said code is loaded into said computer (20, 22):

> determine a first delivery rate of a first material to be received from the first production environment (PL1) during a first time period,
> receive, from the first production environment (PL1), if the first delivery rate of the first material cannot be provided from the first production environment (PL1) during said first time period, an indication of the capacity of the first production environment (PL1) regarding said first material comprising at least one delivery rate of said first material that can be provided from the first production environment (PL1),
> determine at least one second delivery rate of said first material and a second time period lying within the capacity provided in said indication, send a request for said second delivery rate of said first material during said second time period to the first production environment (PL1), and add said first material in the second production process during the control of this second production process according to said second delivery rate during said second time period, in order to produce an output product.

19. System of production environments comprising:

a first production environment (PL1) providing a first production process, and

a second production environment (PL2) providing a second production process,

wherein the first production environment (PL1) includes

a device (10, 12) for controlling said first production process, which produces material for use in the second production process and having,

a production planning unit (10) configured to receive, from the second production environment (PL2), a request for a first delivery rate of a first material to the second production environment (PL2) during a first time period,

determine if the delivery rate of said first material can be provided or not during said first time period,

generate, if the requested first delivery rate of the first material cannot be provided during said first time period, an indication of the capacity of the first production environment (PL1) regarding said first material comprising at least one delivery rate of said first material that can be provided from the first production environment (PL1),

send said indication to the second production environment (PL2), and

receive, from said second production environment (PL2), a request for at least one second delivery rate of said first material during a second time period lying within the capacity provided in said indication,

a production control unit (12) configured to control the first process to produce said first material at a rate of production that enables supply of said first material at said second delivery rate during said second time period to the second production environment (PL2), and

said second production environment (PL2) includes

a device (20, 22) for controlling said second production process having

a production planning unit (20) configured to determine said first delivery rate of said first material and said first time period,

send said request for said first delivery rate of said first material during said first time period,

receive said indication, if the first delivery rate of said first material during said first time period cannot be provided from the first production environment (PL1),

determine said second delivery rate of said first material and said second time period,

send said request for said second delivery rate of said first material during said second time period to the first production environment (PL1), and

a production control unit (22) configured to add said first material in said second production process during the control of this second production process

according to said second delivery rate during said second time period, in order to produce an output product.

20. System of production environments according to claim 19, further comprising a third production environment (PL3) providing a third production process and comprising,

a device (28, 30) for controlling said third production process, which produces material for use in the first production process and having

a production planning unit (28) configured to receive, from the first production environment (PL1), a request for a first delivery rate of a second material during a third time period,

determine if the delivery rate of said second material can be provided or not during said third time period,

generate, if the requested first delivery rate of second material cannot be supplied during said third time period, an indication of the capacity of the third production environment (PL3) regarding said second material comprising at least one delivery rate of said second material that can be provided from the third production environment (PL3),

send said indication to the first production environment (PL1), and

receive, from said first production environment (PL1), a request for at least one second delivery rate of second material during a fourth time period lying within the capacity provided in said indication,

a production control unit (30) configured to control the third process for supplying the second delivery rate of said second material to the first production environment (PL1) during said fourth time period,

wherein the production planning unit (10) of the first production environment (PL1) is further configured to

determine said first delivery rate of said second material and said third time period,

send said request for a first delivery rate of the second material during said third time period,

receive said indication,

determine, if the first delivery rate of said second material cannot be provided from the third production environment (PL3) during said third time period, said second delivery rate of said second material and said fourth time period lying within the capacity provided in said indication,

send said request for said second delivery rate of said second material during said fourth time period to the third production environment (PL3), and

base the determining of if the first delivery rate of said first material during said first time period can be provided or not and the generation of said indication of the capacity of the first production environment regarding said first material that can be supplied to the second production environment (PL2) also on the indication supplied by said third production environment (PL3),

whereby said production control unit (12) of the first production environment (PL1) is further configured to add said second material in the first production process during the control of this first production process according to said second delivery rate of said second material during said fourth time period, in order to produce said first material.

# Integrated Pulp & Paper planning process

FIG. 1

FIG. 2

RECEIVE ORDER AT PL2 — 34

↓

PLAN PRODUCTION ACCORDING TO ORDER — 36

↓

DETERMINE FIRST DELIVERY RATE OF INPUT MATERIAL TO SECOND PROCESS — 38

↓

SEND REQUEST FOR FIRST DELIVERY RATE TO PL1 — 40

↓

RECEIVE RESPONSE — 42

↓

REQUEST ACCEPTED ? — 44

Y → PRODUCE ACCORDING TO PLAN — 46

N ↓

ANALYZE INDICATION OF DELIVERY RATE PL1 CAN SUPPLY — 48

↓

REPLAN PRODUCTION — 50

↓

DETERMINE NEW DELIVERY RATE OF INPUT MATERIAL TO SECOND PROCESS — 52

↓

SEND REQUEST FOR NEW DELIVERY RATE TO PL1 — 54

FIG. 3

RECEIVE REQUEST FOR DELIVERY RATE OF MATERIAL FROM PL2 — 56

DETERMINE IF REQUESTED DELIVERY RATE CAN BE PROVIDED — 58

60

N    REQUEST ACCEPTED ?    Y

70

GENERATE INDICATION OF DELIVERY RATE PL1 CAN SUPPLY

62 — GENERATE INDICATION

64 — SEND INDICATION TO PL2

72

SEND INDICATION TO PL2

66 — PLAN PRODUCTION ACCORDING TO REQUEST

68 — PRODUCE ACCORDING TO PLAN

FIG. 4

○

— 74

FIG. 5

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 195 041 A (GEORGE MICHAEL L [US] ET AL) 16 March 1993 (1993-03-16) * column 6, line 33 - column 11, line 40 * * column 14, line 46 - line 68 * ----- | 1-20 | INV. G05B19/418 |
| Y | FARAHMAND K ET AL INSTITUTE OF ELECTRICAL AND ELECTRONICS ENGINEERS: "Floor Inventory Tracking Of A Kanban Production System" PROCEEDINGS OF THE WINTER SIMULATION CONFERENCE (WSC). LAKE BUENA VISTA, DEC. 11 - 14, 1994, NEW YORK, IEEE, US, 11 December 1994 (1994-12-11), pages 1027-1034, XP010305913 ISBN: 0-7803-2109-X * page 1027 - page 1029 * ----- | 1-20 | |
| Y | YOONHO SEO ET AL: "CONFIGURATION AND OPERATION OF A PULL-TYPE FLEXIBLE MANUFACTURING SYSTEM" MANUFACTURING REVIEW, AMERICAN SOCIETY OF MECHANICAL ENGINEERS, NEW YORK, US, vol. 4, no. 1, 1 March 1991 (1991-03-01), pages 44-52, XP000204977 ISSN: 0896-1611 * page 44 - page 48 * ----- | 1-20 | |

TECHNICAL FIELDS SEARCHED (IPC)

G05B

The present search report has been drawn up for all claims

| Place of search | Date of completion of the search | Examiner |
|---|---|---|
| Munich | 25 May 2007 | Jonda, Sven |

EPO FORM 1503 03.82 (P04C01)

## ANNEX TO THE EUROPEAN SEARCH REPORT
## ON EUROPEAN PATENT APPLICATION NO.

EP 07 10 2731

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2007

| Patent document cited in search report | Publication date | Patent family member(s) | Publication date |
|---|---|---|---|
| US 5195041 A | 16-03-1993 | US 5351195 A | 27-09-1994 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03107103 A

**Non-patent literature cited in the description**

- **SIMO SÄYNEVIRTA ; MIKA LUOTOJÄRVI.** Integrated Paper Production and Energy Planning. *Pulpaper 2004 Conference,* 01 June 2004